# EUROPEAN PATENT APPLICATION

(11) **EP 4 404 656 A1**
(43) Date of publication of application: **24.07.2024**
(21) Application number: 21957134.6
(22) Date of filing: 17.09.2021
(51) Int. Cl.: H04W 72/04

(54) **SYSTEM INFORMATION TRANSMISSION METHOD AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Hughes, Andrea Michelle
(86) International application number: PCT/CN2021/119138
(87) International publication number: WO 2023/039852

(57) **Abstract**

Disclosed in embodiments of the present disclosure are a system information (SI) transmission method and apparatus. The method is executed by a network side device. The method comprises: according to the configuration corresponding to a received SI request message sent by a terminal, sending requested SI on a first initial downlink bandwidth part or a second initial downlink bandwidth part corresponding to the configuration. Thus, when a first-type terminal and a second-type terminal camp on the first initial downlink bandwidth part at the same time, and on-demand SI is transmitted on the first initial downlink bandwidth part, the first-type terminal and the second-type terminal may both monitor the on-demand SI, such that transmitting separately on the two initial downlink bandwidth parts is avoided, and the transmission efficiency of the network side device may be improved. Moreover, when the first-type terminal camps on the second initial downlink bandwidth part, the on-demand SI is transmitted on a second initial bandwidth part, such that the first-type terminal does not need to switch between the first initial downlink bandwidth part and the second initial downlink bandwidth part, and power consumption of the first-type terminal may be conserved.

## Description

### FIELD

The present disclosure relates to the field of communications, and in particular to a system information transmission method and apparatus.

### BACKGROUND

In the current 3GPP (third generation partnership project) standardization, a new terminal type called Reduced Capability UE (user equipment, terminal) or simply NR-lite or Redcap terminal is proposed, which is also called capability reduced UE in some scenarios.

With the introduction of the Redcap terminal into the NR (new radio) system, a separate initial DL BWP (initial downlink bandwidth partinitial) and a separate initial UL BWP (initial uplink bandwidth partinitial) will be configured for the Redcap terminal, while the network-side device originally has an initial DL BWP and an initial ULBWP. This will cause the network-side device to have multiple initial DL BWPs and multiple initial ULBWPs. In this case, how to transmit on-demand SI (system information) is an urgent problem that need to be solved.

### SUMMARY

Embodiments of the present disclosure provide a system information transmission method and apparatus to realize transmission of on-demand SI.

In a first aspect, embodiments of the present disclosure provide a system information transmission method. The method is executed by a network-side device and includes: according to a configuration corresponding to a received system information, SI, request message sent by a terminal, sending requested SI on a first initial downlink bandwidth part or a second initial downlink bandwidth part corresponding to the configuration.

In this technical solution, according to the configuration corresponding to the received system information SI request message sent by the terminal, the requested SI is sent on the first initial downlink bandwidth part or the second initial downlink bandwidth part corresponding to the configuration. Therefore, when the first type of terminal and the second type of terminal reside in the first initial downlink bandwidth part at the same time, and the on-demand SI is transmitted on the first initial downlink bandwidth part, the first type of terminal and the second type of terminal may both monitor the on-demand SI, thus avoiding transmission on two initial downlink bandwidth parts separately, and improving the transmission efficiency of the network-side device. Moreover, when the first type of terminal resides in the second initial downlink bandwidth part, the on-demand SI is transmitted on the second initial bandwidth part, so that the first type of terminal is prevented from switching back and forth between the first initial downlink bandwidth part and the second initial downlink bandwidth part, thus reducing power consumption of the first type of terminal.

In a second aspect, embodiments of the present disclosure provide another system information transmission method. The method is executed by a first type of terminal and includes: sending a system information, SI, request message, and according to a configuration corresponding to the SI request message, receiving requested SI on a first initial downlink bandwidth part or a second initial downlink bandwidth part corresponding to the configuration.

In a third aspect, embodiments of the present disclosure provide a system information transmission apparatus. The system information transmission apparatus has some or all functions of realizing the network-side device in the method example described in the first aspect. For example, the function of the system information transmission apparatus may have the functions of some or all of embodiments in the present disclosure, or may also have the function of independently implementing any embodiment in the present disclosure. The functions may be realized by hardware, or by hardware executing corresponding software. The hardware or software includes one or more units or modules corresponding to the above functions.

In an implementation, a structure of the system information transmission apparatus may include a transceiver module, and the transceiver module is configured to support the communication between the system information transmission apparatus and other devices. The system information transmission apparatus may further include a storage module, and the storage module is configured to couple to the transceiver module and a processing module, and store a computer program and data necessary for the system information transmission apparatus.

In an implementation, the system information transmission apparatus includes a transceiver module, and the transceiver module is configured to, according to a configuration corresponding to a received system information SI request message sent by a terminal, send requested SI on a first initial downlink bandwidth part or a second initial downlink bandwidth part corresponding to the configuration.

In a fourth aspect, embodiments of the present disclosure provide another system information transmission apparatus. The system information transmission apparatus has some or all functions of realizing the terminal device in the method described in the second aspect. For example, the function of the communication apparatus may have the functions of some or all of embodiments in the present disclosure, or may also have the function of independently implementing any embodiment in the present disclosure. The functions may be realized by hardware, or by hardware executing corresponding software. The hardware or software includes one or more units or modules corresponding to the above functions.

In an implementation, a structure of the communication apparatus may include a transceiver module and a processing module, and the processing module is configured to support the communication apparatus to perform the corresponding functions in the above method. The transceiver module is configured to support communication between communication apparatus and other devices. The communication apparatus may also include a storage module, and the storage module is configured to couple to the transceiver module and the processing module, and store a computer program and data necessary for the communication apparatus.

As an example, the processing module may be a processor, the transceiver module may be a transceiver or a communication interface, and the storage module may be a memory.

In an implementation, the system information transmission apparatus includes a transceiver module, and the transceiver module is configured to send a system information, SI, request message, and according to a configuration corresponding to the SI request message, receive requested SI on a first initial downlink bandwidth part or a second initial downlink bandwidth part corresponding to the configuration.

In a fifth aspect, embodiments of the present disclosure provide a communication apparatus, the communication apparatus includes a processor, and when the processor calls a computer program in a memory, the method described in the first aspect is performed.

In a sixth aspect, embodiments of the present disclosure provide a communication apparatus, the communication apparatus includes a processor, and when the processor calls a computer program in a memory, the method described in the second aspect is executed.

In a seventh aspect, embodiments of the present disclosure provide a communication apparatus, and the communication apparatus includes a processor and a memory. A computer program is stored in the memory, and the processor executes the computer program stored in the memory to cause the communication apparatus to perform the method described in the first aspect.

In an eighth aspect, embodiments of the present disclosure provide a communication apparatus, and the communication apparatus includes a processor and a memory. A computer program is stored in the memory, and the processor executes the computer program stored in the memory to cause the communication apparatus to perform the method described in the second aspect.

In a ninth aspect, embodiments of the present disclosure provide a communication apparatus, and the communication apparatus includes a processor and an interface circuit. The interface circuit is configured to receive code instructions and transmit the code instructions to the processor, and the processor is configured to execute the code instructions so that the apparatus performs the method described in the first aspect.

In a tenth aspect, embodiments of the present disclosure provide a communication apparatus, and the communication apparatus includes a processor and an interface circuit. The interface circuit is configured to receive code instructions and transmit the code instructions to the processor, and the processor is configured to execute the code instructions such that the apparatus performs the method described in the second aspect.

In an eleventh aspect, embodiments of the present disclosure provide a system information transmission system. The system includes the system information transmission apparatus described in the third aspect and the system information transmission apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

In a twelfth aspect, embodiments of the present disclosure provide a computer-readable storage medium configured to store instructions for the terminal device described above. When the instructions are executed, the terminal device is caused to perform the method described in the first aspect.

In a thirteenth aspect, embodiments of the present disclosure provide a readable storage medium configured to store instructions for the network device described above. When the instructions are executed, the network device is caused to perform the method described in the second aspect.

In a fourteenth aspect, the present disclosure also provides a computer program product including a computer program, and when the computer program product is executed on a computer, the computer is caused to perform the method described in the first aspect.

In a fifteenth aspect, the present disclosure also provides a computer program product including a computer program, and when the computer program product is executed on a computer, the computer is caused to perform the method described in the second aspect.

In a sixteenth aspect, the present disclosure provides a chip system. The chip system includes at least one processor and an interface configured to support the terminal device to realize the functions related to the first aspect, for example, determining or processing at least one of data and information related to the above method. In a possible design, the chip system further includes a memory configured to store a computer program and data necessary for the terminal device. The chip system may be composed of a chip, or may include a chip and other discrete devices.

In a seventeenth aspect, the present disclosure provides a chip system. The chip system includes at least one processor and an interface configured to support the network device to realize the functions related to the second aspect, for example, determining or processing at least one of data and information related to the above method. In one possible design, the chip system further includes a memory configured to store a computer program and data necessary for the network device. The chip system may be composed of a chip, or may include a chip and other discrete devices.

In an eighteenth aspect, the present disclosure provides a computer program, and when the computer program is executed on a computer, the computer is caused to perform the method described in the first aspect.

In a nineteenth aspect, the present disclosure provides a computer program, and when the computer program is executed on a computer, the computer is caused to perform the method described in the second aspect.

### BRIEF DESCRIPTION OF THE DRAWINGS

In order to more clearly explain the technical solution in embodiments of the present disclosure or the background technology, the drawings needed in embodiments of the present disclosure or the background technology will be explained below.
FIG. 1 is an architecture diagram of a communication system provided by an embodiment of the present disclosure;
FIG. 2 is a flow chart of a system information transmission method provided by an embodiment of the present disclosure;
FIG. 3 is a flow chart of another system information transmission method provided by an embodiment of the present disclosure;
FIG. 4 is a flow chart of yet another system information transmission method provided by an embodiment of the present disclosure;
FIG. 5 is a flow chart of yet another system information transmission method provided by an embodiment of the present disclosure;
FIG. 6 is a flow chart of yet another system information transmission method provided by an embodiment of the present disclosure;
FIG. 7 is a flow chart of yet another system information transmission method provided by an embodiment of the present disclosure;
FIG. 8 is a flow chart of yet another system information transmission method provided by an embodiment of the present disclosure;
FIG. 9 is a flow chart of yet another system information transmission method provided by an embodiment of the present disclosure;
FIG. 10 is a flow chart of yet another system information transmission method provided by an embodiment of the present disclosure;
FIG. 11 is a flow chart of yet another system information transmission method provided by an embodiment of the present disclosure;
FIG. 12 is a flow chart of yet another system information transmission method provided by an embodiment of the present disclosure;
FIG. 13 is a flow chart of yet another system information transmission method provided by an embodiment of the present disclosure;
FIG. 14 is a flow chart of yet another system information transmission method provided by an embodiment of the present disclosure;
FIG. 15 is a flow chart of yet another system information transmission method provided by an embodiment of the present disclosure;
FIG. 16 is a flow chart of yet another system information transmission method provided by an embodiment of the present disclosure;
FIG. 17 is a flow chart of yet another system information transmission method provided by an embodiment of the present disclosure;
FIG. 18 is a structural diagram of a system information transmission apparatus provided by an embodiment of the present disclosure;
FIG. 19 is a structural diagram of a communication apparatus provided by an embodiment of the present disclosure; and
FIG. 20 is a schematic structural diagram of a chip provided by an embodiment of the present disclosure.

### DETAILED DESCRIPTION

In order to better understand a system information transmission method disclosed by embodiments of the present disclosure, the communication system to which embodiments of the present disclosure applies will be described below.

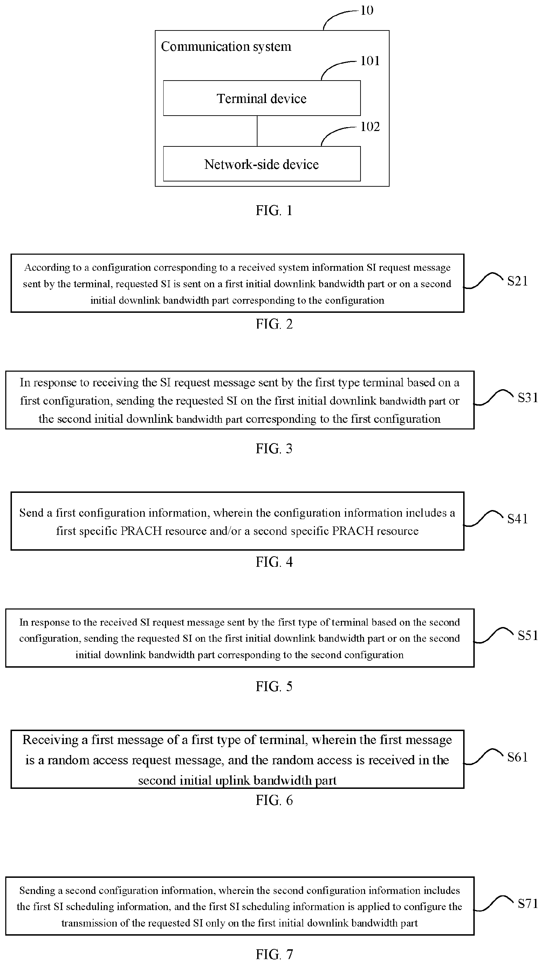

Please refer to FIG. 1, FIG. 1 is a schematic architecture diagram of a communication system 10 provided by an embodiment of the present disclosure. The communication system 10 may include, but is not limited to, a network-side device and a terminal. The number and form of devices illustrated in FIG. 1 are only used for example, and do not constitute a limitation of embodiments of the present disclosure. In practical application, it may include two or more network-side devices and two or more terminals. As an example, the communication system 10 illustrated in FIG. 1 includes a network-side device 101 and a terminal 102.

It should be noted that the technical solution of embodiments of the present disclosure may be applied to various communication systems, such as: long term evolution (LTE) system, 5th generation (5G) mobile communication system, 5G new radio (NR) system, or other new mobile communication systems in the future.

The network-side device 101 in embodiments of the present disclosure is an entity on a network side for transmitting or receiving signals. For example, the network-side device 101 may be an evolved NodeB (eNB), a transmission reception point (TRP), a next generation NodeB (gNB) in NR system, a base station in other future mobile communication systems or an access node in a wireless fidelity (WiFi) system. Embodiments of the present disclosure do not limit the specific technology and the specific device form adopted by the network-side device. The network-side device provided by embodiments of the present disclosure may be composed of a central unit (CU) and a distributed unit (DU), where CU may also be called a control unit. By adopting the structure of CU-DU, the protocol layer of the network-side device, such as a base station, may be separated, and some functions of the protocol layer may be placed on CU for centralized control, while some or all of the remaining functions of the protocol layer are distributed in DU and centrally controlled by CU.

The terminal 102 in embodiments of the present disclosure is an entity on a user side for receiving or transmitting signals, such as a mobile phone. A terminal may also be called a terminal, user equipment (UE), a mobile station (MS), a mobile terminal (MT), and the like. The terminal may be a car with communication function, a smart car, a mobile phone, a wearable device, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present disclosure do not limit the specific technology and the specific device form adopted by the terminal.

It may be understood that the communication system described in embodiments of the present disclosure is for more clearly explaining the technical solution of embodiments of the present disclosure, and does not constitute a limitation on the technical solution provided by embodiments of the present disclosure. Those skilled in the art know that with the evolution of the system architecture and the emergence of new business scenarios, the technical solution provided by embodiments of the present disclosure is also applicable to similar technical problems.

In the LTE 4G system, two technologies, MTC (machine type communication) and NB-IoT (Narrow Band-Internet of Things), are proposed to support the Internet of Things service. These two technologies are mainly aimed at low-rate and high-delay scenarios, such as meter reading and environmental monitoring.

NB-IoT may only support a maximum rate of a few hundred k at present, while MTC may only support a maximum rate of several M at present. However at the same time, on the one hand, with the continuous development and popularization of Internet of Things services, such as video surveillance, smart home, wearable device and industrial sensor monitoring, these services usually require a rate of tens to 100M and have relatively high requirements for time delay, but MTC and NB-IoT technologies in LTE are difficult to meet the requirements. Based on this, it is proposed to design a new terminal in 5G NR (new radio) to cover requirements of this mid-range Internet of Things device. In the current 3GPP (the 3rd Generation Partnership Project) standardization, this new terminal type is called Reduced capability (Redcap terminal) or simply called RedCap (NR lite). On the other hand, similar to the Internet of Things devices in LTE, the RedCap in a 5G-based system usually needs to meet the following requirements: low cost and low complexity; a certain degree of coverage enhancement; and power saving.

However, the current NR (new radio) is designed for high-end terminals with high rate and low delay, and the current design cannot meet the above requirements of RedCap. Therefore, it is necessary to reform the current NR system to meet the requirements of RedCap. For example, in order to meet the requirements of low cost and complexity, the RF(radio frequency) bandwidth of NR-IoT may be limited, for example, to 5M Hz or 10M Hz, or the buffer size of RedCap may be limited, and then the size of each received transport block may be limited. For power saving, the possible optimization direction is to simplify the communication process and reduce the times of detections of the downlink control channel by the RedCap terminal.

In the related art, regarding the transmission of on-demand SI in NR system, in the current system information transmission, some system information may be set to broadcast mode or non-broadcast mode, where the non-broadcast mode system information is on-demand SI. In related art, on-demand SI has the following two request methods.

Method 1: The network device will configure a dedicated PRACH (Physical Random Access Channel) resource, and the terminal will send a specific preamble to obtain the required system information.

Method 2: The network-side device will not configure dedicated PRACH resource, and the terminal sends an on-demand SI request in the message 3 (Msg3).

However, with the introduction of the Redcap terminal into the NR system, a separate initial DL BWP and a separate initial UL BWP are configured for the Redcap terminal, while the network-side device originally has an initial DL BWP and an initial UL BWP, which will cause the network-side device to have multiple initial DL BWPs and multiple Initial ULBWPs. In this case, how to transmit on-demand SI (system information) is an urgent problem that needs to be solved.

Based on this, embodiments of the present disclosure provide a system information transmission method to at least solve the technical problems in the related art that a separate initial DL/UL BWP is configured for the Redcap terminal, and multiple initial DLIULBWPs exist in the network-side device, so that on-demand SI transmission cannot be performed.

The system information transmission method and apparatus provided by the present disclosure are introduced in detail with the attached drawings below.

Please refer to FIG. 2, and FIG. 2 is a flow chart of a system information transmission method provided by an embodiment of the present disclosure.

As illustrated in FIG. 2, the method is executed by the network-side device, and the method may include but not limited to the following steps.

At S21, according to a configuration corresponding to a received system information, SI, request message sent by the terminal, requested SI is sent on a first initial downlink bandwidth part or a second initial downlink bandwidth part corresponding to the configuration.

In some possible implementations, the terminal includes a first type of terminal and a second type of terminal, and the first type of terminal may be a Redcap terminal, and the second type of terminal may be an ordinary terminal. A terminal capability of the first type of terminal is different from a terminal capacity of the second type of terminal.

The first initial downlink bandwidth part may be used by the first type of terminal and the second type of terminal, and the second initial downlink bandwidth part may only be used by the first type of terminal.

In embodiments of the present disclosure, the configuration corresponding to the SI request message sent by the first type of terminal is different from a configuration corresponding to the SI request message sent by the second type of terminal, so the network-side device may determine the type of the terminal sending the SI request message according to the configuration corresponding to the received SI request message, and determine the result of whether the requested SI should be sent on the first initial downlink bandwidth part or the requested SI should be sent on the second initial downlink bandwidth part. Therefore, according to the type of the terminal and the determined result that the requested SI should be sent on the first initial downlink bandwidth part or the determined result that the requested SI should be transmitted on the second initial downlink bandwidth part, the network-side device may send the requested SI on the corresponding first initial downlink bandwidth part or second initial downlink bandwidth part.

In an illustrative embodiment, in the case that the network-side device determines that the type of the terminal is the first type of terminal according to the configuration corresponding to the received SI request message sent by the terminal, and determines that the requested SI should be sent on the first initial downlink bandwidth part, the network-side device sends the requested SI to the first type of terminal on the first initial downlink bandwidth part.

In another illustrative embodiment, in the case that the network-side device determines that the type of the terminal is the first type of terminal according to the configuration corresponding to the received SI request message sent by the terminal, and determines that the requested SI should be sent on the second initial downlink bandwidth part, the network-side device sends the requested SI to the first type of terminal on the second initial downlink bandwidth part. Therefore, in the case that it is determined that the requested SI should be sent on the second initial downlink bandwidth part, the network-side device sends the requested SI on the second initial downlink bandwidth part, and the network-side device does not need to transmit the requested SI on the first initial downlink bandwidth part and the second initial downlink bandwidth part separately, so that the transmission efficiency of the network-side device may be improved. Moreover, the first type of terminal may reside in the second initial downlink bandwidth part and receive the requested SI on the second initial downlink bandwidth part, thus avoiding the first type of terminal from switching back and forth between the first initial downlink bandwidth part and the second initial downlink part and saving the power consumption of the first type of terminal.

In yet another illustrative embodiment, in the case that the network-side device determines that the type of the terminal is the second type of terminal according to the configuration corresponding to the received SI request message sent by the terminal, and determines that the requested SI should be sent on the first initial downlink bandwidth part, the network-side device sends the requested SI to the second type of terminal on the first initial downlink bandwidth part.

By implementing embodiments of the present disclosure, the network-side device sends the requested SI on the first initial downlink bandwidth part or the second initial downlink bandwidth part corresponding to the configuration according to the configuration corresponding to the received system information SI request message sent by the terminal. Therefore, when the first type of terminal and the second type of terminal reside in the first initial downlink bandwidth part at the same time, and the on-demand SI is transmitted on the first initial downlink bandwidth part, the first type of terminal and the second type of terminal may both monitor the on-demand SI, thus avoiding transmission in two initial downlink bandwidth parts separately, and improving the transmission efficiency of the network-side device. Moreover, when the first type of terminal resides in the second initial downlink bandwidth part, the on-demand SI is transmitted on the second initial bandwidth part, so that the first type of terminal is prevented from switching back and forth between the first initial downlink bandwidth part and the second initial downlink bandwidth part, thus reducing the power consumption of the first type of terminal.

Please refer to FIG. 3, and FIG. 3 is a flow chart of another system information transmission method provided by an embodiment of the present disclosure.

As illustrated in FIG. 3, the method is executed by the network-side device, and the method may include but not limited to the following steps.

At S31: in response to receiving the SI request message sent by the first type of terminal based on a first configuration, the requested SI is sent on the first initial downlink bandwidth part or the second initial downlink bandwidth part corresponding to the first configuration.

In embodiments of the present disclosure, after receiving the SI request message sent by the first type of terminal based on the first configuration, the network-side device may determine that its terminal type is the first type of terminal, and determine the result of whether the requested SI should be sent on the first initial downlink bandwidth part or the requested SI should be sent on the second initial downlink bandwidth part.

In some possible implementations, the first configuration includes a first specific physical random access channel (PRACH) resource. That is, S31 of the embodiment may be to send the requested SI on the first initial downlink bandwidth part or the second initial downlink bandwidth part corresponding to the first configuration in response to receiving the SI request message sent by the first type of terminal using the first specific PRACH resource.

In all embodiments of the present disclosure, the first type of terminal may use the first specific PRACH resource to send the SI request message, the second type of terminal may use a second specific PRACH resource to send the SI request message; and the first specific PRACH resource used by the first type of terminal is different from the second specific PRACH resource used by the second type of terminal. Therefore, the network-side device may determine whether the type of the terminal sending the SI request message is the first type of terminal or the second type of terminal according to the received first specific PRACH resource or the second specific PRACH resource.

In some possible implementations, the first initial downlink bandwidth part may be used by the second type of terminal and the first type of terminal, and the second initial downlink bandwidth part may only be used by the first type of terminal. In some possible implementations, the first type of terminal may be a Redcap terminal, and the second type of terminal may be an ordinary terminal, and the terminal capability of the first type of terminal is different from the terminal capability of the second type of terminal.

In the above embodiments, the first type of terminal and the second type of terminal use different PRACH resources. After receiving the PRACH resource for sending the SI request message, the network-side device may determine whether the terminal sending the SI request message is the first type of terminal or the second type of terminal according to the PRACH resource corresponding to the SI request message. The corresponding network-side device may determine the result of whether the requested SI should be sent on the first initial downlink bandwidth part or the second initial downlink bandwidth part according to the type of the terminal and based on the first configuration, and send the requested SI on the first initial downlink bandwidth part or the second initial downlink bandwidth part correspondingly. That is, in response to the received SI request message being sent through the first specific PRACH resource, it may be determined that the terminal sending the SI request message is the first type of terminal; the result of whether the requested SI should be sent on the first initial downlink bandwidth part or the requested SI should be sent on the second initial downlink bandwidth part is determined based on the first configuration; and the requested SI is sent on the first initial downlink bandwidth part or the second initial downlink bandwidth part correspondingly.

Based on this, in the case that the network-side device determines that the terminal type is the first type of terminal according to the received SI request message including the first specific PRACH resource, and determines that the requested SI should be sent in the first initial downlink bandwidth part based on the first configuration, the network-side device sends the requested SI to the first type of terminal on the first initial downlink bandwidth part. Or, in the case that the network-side device determines that the terminal type is the first type of terminal according to the received SI request message including the first specific PRACH resource, and determines that the requested SI should be transmitted on the second initial downlink bandwidth part based on the first configuration, the network-side device sends the requested SI to the first type of terminal on the second initial downlink bandwidth part. Therefore, the network-side device is prevented from transmitting the requested SI in the first initial downlink bandwidth part and the second initial downlink bandwidth part separately, so that the transmission efficiency of the network-side device may be improved. Moreover, when the first type of terminal resides in the second initial downlink bandwidth part, the requested SI may be received on the second initial downlink bandwidth part, so that the first type of terminal is prevented from switching back and forth between the first initial downlink bandwidth part and the second initial downlink bandwidth part, thus reducing the power consumption of the first type of terminal.

In some embodiments, the first specific PRACH resource includes at least one of the following: a specific preamble; a specific PRACH transmission opportunity; a specific frequency resource; or a specific initial uplink bandwidth part.

In embodiments of the present disclosure, the first specific PRACH resource of the first type of terminal may include a specific preamble and/or a specific PRACH transmission opportunity and/or a specific frequency resource and/or a specific initial uplink bandwidth part.

Please refer to FIG. 4, and FIG. 4 is a flow chart of another system information transmission method provided by an embodiment of the present disclosure.

As illustrated in FIG. 4, the method is executed by the network-side device, and the method may include but not limited to the following steps.

At S41: first configuration information is sent, and the configuration information includes a first specific PRACH resource and/or a second specific PRACH resource.

It should be noted that step S41 may be implemented alone or in combination with any of other steps in embodiments of the present disclosure, for example, in combination with step S21 and/or step S31 in embodiments of the present disclosure, which is not limited by embodiments of the present disclosure.

In embodiments of the present disclosure, the first configuration information may be a SIB1 message and a system information block (SIB).

In the above embodiment, the first configuration information includes the first specific PRACH resource, and the network-side device sends the first configuration information including the first specific PRACH resource to the first type of terminal, to inform the first type of terminal of the PRACH resource for sending the SI request message.

In the above embodiment, the first configuration information includes the second specific PRACH resource, and the network-side device sends the first configuration information including the second specific PRACH resource to the second type of terminal, to inform the second type of terminal of the PRACH resource for sending the SI request message.

In the above embodiment, the first configuration information includes the first specific PRACH resource and the second specific PRACH resource, and the network-side device sends the first configuration information including the first specific PRACH resource to the first type of terminal and sends the configuration information including the second specific PRACH resource to the second type of terminal, to separately inform the first type of terminal and the second type of terminal of the PRACH resource for sending the SI request message.

There are many ways for the first type of terminal to determine the first specific PRACH resource. In the above embodiments, the network-side device makes the first type of terminal determine the first specific PRACH resource by sending the first configuration information. However, it may be understood by those skilled in the art that the first type of terminal may also determine the first specific PRACH resource in other ways, such as by communication protocol, or receiving the first configuration information of the first specific PRACH resource from other devices, or pre-storing it in the first type of terminal, which is not limited by embodiments of the present disclosure. Correspondingly, there are many ways for the second type of terminal to determine the second specific PRACH resource, such as the previous examples, which will not be repeated here.

Please refer to FIG. 5, and FIG. 5 is a flow chart of another system information transmission method provided by an embodiment of the present disclosure.

As illustrated in FIG. 5, the method is executed by the network-side device, and the method may include but not limited to the following steps.

At S51: in response to the received SI request message sent by the first type of terminal based on the second configuration, the requested SI is sent on the first initial downlink bandwidth part or the second initial downlink bandwidth part corresponding to the second configuration.

In embodiments of the present disclosure, after receiving the SI request message sent by the first type of terminal based on the second configuration, the network-side device may determine that its terminal type is the first type of terminal, and determine the result of whether the requested SI should be sent on the first initial downlink bandwidth part or the requested SI should be sent on the second initial downlink bandwidth part.

In some possible implementations, the second configuration includes a message 3 (Msg3) including the SI request message sent by the first type of terminal using the second initial uplink bandwidth part, that is, S41 of the above embodiments may be sending the requested SI on the first initial downlink bandwidth part or the second initial downlink bandwidth part corresponding to the second configuration in response to receiving the message 3 (Msg3) including the SI request message sent by the first type of terminal using the second initial uplink bandwidth part.

In embodiments of the present disclosure, the initial uplink bandwidth parts used by the first type of terminal and the second type of terminal to send the message 3 (Msg3) may be different. The first type of terminal may use the first initial uplink bandwidth part or the second initial uplink bandwidth part to send the message 3 (Msg3), and the second type of terminal may only use the first initial uplink bandwidth part to send the message 3 (Msg3). Therefore, according to the received message 3 (Msg3) sent by the first type of terminal using the second initial uplink bandwidth part, the network-side device may determine that the message 3 (Msg3) is sent by the first type of terminal, thereby determining that the type of the first type of terminal is the first type of terminal.

In some possible implementations, the first initial downlink bandwidth part may be used by the second type of terminal and the first type of terminal, and the second initial downlink bandwidth part may only be used by the first type of terminal. In some possible implementations, the first type of terminal may be a Redcap terminal, the second type of terminal may be an ordinary terminal, and the terminal capability of the first type of terminal is different from the terminal capability of the second type of terminal.

In the above embodiments, the network-side device receives the message 3 (Msg3) including the SI request message sent through the second initial uplink bandwidth part used by the first type of terminal, and may determine that its terminal type is the first type of terminal. The corresponding network-side device may determine the result of whether the requested SI should be sent on the first initial downlink bandwidth part or on the second initial downlink bandwidth part according to the terminal type and based on the second configuration, and correspondingly send the requested SI on the first initial downlink bandwidth part or the second initial downlink bandwidth part. That is, in response to receiving the message 3 (Msg3) including the SI request message sent through the second initial uplink bandwidth part used by the first type of terminal, it may be determined that its terminal type is the first type of terminal, and based on the second configuration, it is determined whether the requested SI should be sent on the first initial downlink bandwidth part or the second initial downlink bandwidth part, and correspondingly the requested SI is sent on the first initial downlink bandwidth part or the second initial downlink bandwidth part.

Based on this, in the case that the network-side device determines that the terminal type is the first type of terminal according to the received message 3 (Msg3) including the SI request message sent through the second initial uplink bandwidth part used by the first type of terminal, and determines that the requested SI should be sent on the first initial downlink bandwidth part based on the second configuration, the network-side device sends the requested SI to the first type of terminal on the first initial downlink bandwidth part. Or, in the case that the network-side device determines that the terminal type is the first type of terminal according to the received SI request message including the first specific PRACH resource, and determines that the requested SI should be transmitted on the second initial downlink bandwidth part based on the second configuration, the network-side device sends the requested SI to the first type of terminal on the second initial downlink bandwidth part. Therefore, the network-side device is prevented from transmitting the requested SI on the first initial downlink bandwidth part and the second initial downlink bandwidth part separately, so that the transmission efficiency of the network-side device may be improved. Moreover, when the first type of terminal resides in the second initial downlink bandwidth part, the requested SI may be received on the second initial downlink bandwidth part, so that the first type of terminal is prevented from switching back and forth between the first initial downlink bandwidth part and the second initial downlink bandwidth part, thus reducing the power consumption of the first type of terminal.

In some embodiments, the message 3 (Msg3) includes the information field of the SI request message.

Please refer to FIG. 6, and FIG. 6 is a flow chart of another system information transmission method provided by an embodiment of the present disclosure.

As illustrated in FIG. 6, the method is executed by the network-side device, and the method may include but not limited to the following steps.

At S61: a first message of a first type of terminal is received, the first message is a random access request message, and the random access is received on the second initial uplink bandwidth part.

It may be understood that when the first type of terminal randomly accesses the network-side device, it may send a random access request to the network-side device, thereby initiating random access to the network-side device.

It should be noted that step S61 may be implemented alone or in combination with any of other steps in embodiments of the present disclosure, for example, in combination with step S21 and/or step S31 and/or step S41 and/or step S51 in embodiments of the present disclosure, which is not limited by embodiments of the present disclosure.

Please refer to FIG. 7, and FIG. 7 is a flow chart of yet another system information transmission method provided by an embodiment of the present disclosure.

As illustrated in FIG. 7, the method is executed by the network-side device, and the method may include but not limited to the following steps.

At S71: second configuration information is sent, the second configuration information includes first SI scheduling information, and the first SI scheduling information is applied to configure the transmission of the requested SI only on the first initial downlink bandwidth part.

In embodiments of the present disclosure, the network-side device sends the second configuration information including the first SI scheduling information to the terminal, and the first SI scheduling information indicates that the terminal may receive the requested SI only on the first initial downlink bandwidth. In response to the SI request message sent by the terminal, the network-side device sends the requested SI to the terminal on the first initial downlink bandwidth, and the terminal includes the first type of terminal and the second type of terminal.

In some possible implementations, the terminal includes a first type of terminal and a second type of terminal, the first type of terminal may be a Redcap terminal, and the second type of terminal may be an ordinary terminal. The terminal capability of the first type of terminal is different from the terminal capability of the second type of terminal.

In embodiments of the present disclosure, the first SI scheduling information is applied to configure the transmission of the requested SI only on the first initial downlink bandwidth part. It may be understood that in this case, the requested SI may be received only on the first initial downlink bandwidth part regardless of whether the type of the terminal is the first type of terminal or the second type of terminal.

In embodiments of the present disclosure, the second configuration information may be a SIB1 message and a system information block (SIB).

In the above embodiments, the second configuration information includes the first SI scheduling information, and the network-side device sends the second configuration information including the first SI scheduling information to the terminal, to inform the first type of terminal to receive the requested SI on the first initial downlink bandwidth part.

There are many ways for the first type of terminal to determine the first SI scheduling information. In the above embodiments, the network-side device makes the first type of terminal determine the first SI scheduling information by sending the second configuration information. However, it may be understood by those skilled in the art that the first type of terminal may also determine the first SI scheduling information in other ways, such as by communication protocol, or receiving the configuration information of the first SI scheduling information from other devices, or pre-storing it in the first type of terminal, which is not limited by embodiments of the present disclosure. It should be noted that S71 may be implemented alone or in combination with any of other steps in embodiments of the present disclosure, for example, in combination with S21 and/or S31 and/or S41 and/or S51 and/or S61 in embodiments of the present disclosure, which is not limited by embodiments of the present disclosure.

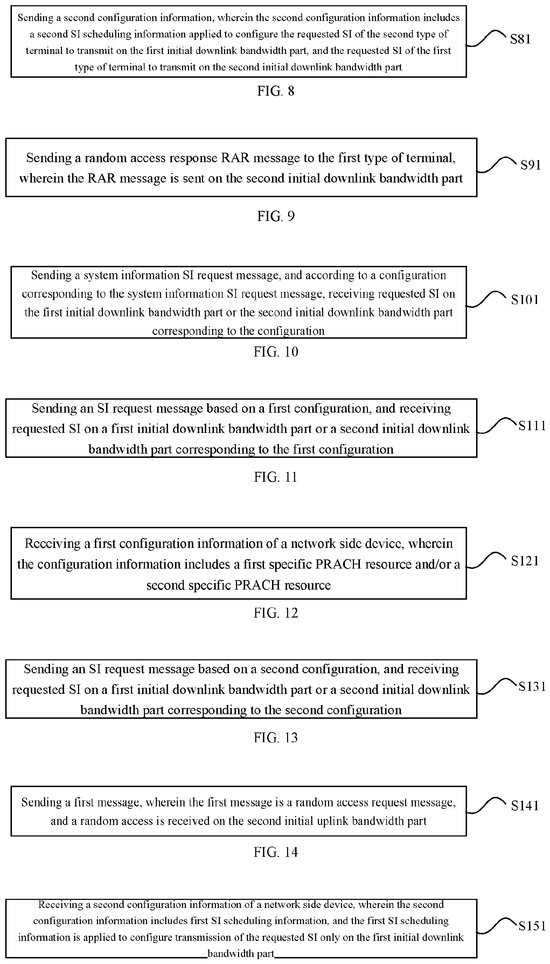

Please refer to FIG. 8, and FIG. 8 is a flow chart of yet another system information transmission method provided by an embodiment of the present disclosure.

As illustrated in FIG. 8, the method is executed by the network-side device, and the method may include but not limited to the following steps.

At S81: the second configuration information is sent, the second configuration information includes a second SI scheduling information, the second SI scheduling information is applied to configure the requested SI of the second type of terminal to transmit on the first initial downlink bandwidth part, and the requested SI of the first type of terminal to transmit on the second initial downlink bandwidth part.

In some possible implementations, the terminal includes a first type of terminal and a second type of terminal, the first type of terminal may be a Redcap terminal, and the second type of terminal may be an ordinary terminal. The terminal capability of the first type of terminal is different from the terminal capability of the second type of terminal.

In embodiments of the present disclosure, the network-side device sends the second configuration information including the second SI scheduling information to the terminal, the second SI scheduling information indicates that the requested SI of the second type of terminal is transmitted on the first initial downlink bandwidth part and the requested SI of the first type of terminal is transmitted on the second initial downlink bandwidth part. In response to the SI request message sent by the first type of terminal, the network-side device sends the requested SI on the second initial downlink bandwidth part, and in response to the SI request message sent by the second type of terminal, the network-side device sends the requested SI on the first initial downlink bandwidth part.

In embodiments of the present disclosure, the second configuration information is sent to the first type of terminal, to inform the first type of terminal to receive the requested SI on the second initial bandwidth part; and the second configuration information is sent to the second type of terminal, to inform the second type of terminal to receive the requested SI on the first initial bandwidth part.

There are many ways for the first type of terminal and the second type of terminal to determine the second SI scheduling information. In the above embodiment, the network-side device makes the first type of terminal and the second type of terminal determine the second SI scheduling information by sending the second configuration information. However, it may be understood by those skilled in the art that the first type of terminal and the second type of terminal may also determine the second SI scheduling information in other ways, such as by communication protocol, or receiving the configuration information of the second SI scheduling information from other devices, or pre-storing it in the first type of terminal and the second type of terminal, which is not limited by embodiments of the present disclosure.

In embodiments of the present disclosure, in the case that the network-side device receives the SI request information sent by the terminal and determines that the terminal type is the first type of terminal, the requested SI is sent to the first type of terminal on the second initial downlink bandwidth part. Therefore, the network-side device may transmit the requested SI only on the second initial downlink bandwidth part, which avoids the need for the network-side device to transmit the requested SI on the first initial downlink bandwidth part and the second initial downlink bandwidth part separately, and may improve the transmission efficiency of the network-side device. Moreover, the first type of terminal resides in the second initial downlink bandwidth part and may receive the requested SI on the second initial downlink bandwidth part, which avoids the first type of terminal from switching back and forth between the first initial downlink bandwidth part and the second initial downlink bandwidth part, thus reducing power consumption of the first type of terminal.

It should be noted that S81 may be implemented alone or in combination with any of other steps in embodiments of the present disclosure, for example, in combination with S21 and/or S31 and/or S41 and/or S51 and/or S61 and/or S71 in embodiments of the present disclosure, which is not limited by embodiments of the present disclosure.

Please refer to FIG. 9, and FIG. 9 is a flow chart of yet another system information transmission method provided by an embodiment of the present disclosure.

As illustrated in FIG. 9, the method is executed by the network-side device, and the method may include but not limited to the following steps.

At S91: a random access response, RAR, message is sent to the first type of terminal, and the RAR message is sent on the second initial downlink bandwidth part.

It should be noted that step S91 may be implemented alone or in combination with any of other steps in embodiments of the present disclosure, for example, in combination with step S21 and/or step S31 and/or step S41 and/or step S51 and/or step S61 and/or step S71 and/or step S81 in embodiments of the present disclosure, which is not limited by embodiments of the present disclosure.

In embodiments of the present disclosure, the network-side device receives the SI request message sent by the first type of terminal on the first specific PRACH resource, or, after receiving a random access sent by the first type of terminal on a second initial uplink bandwidth part, sends a RAR message to the first type of terminal, to inform that the first type of terminal may access the network-side device.

Please refer to FIG. 10, and FIG. 10 is a flow chart of yet another system information transmission method provided by an embodiment of the present disclosure.

As illustrated in FIG. 10, the method is executed by the first type of terminal, and the method may include but is not limited to the following steps.

At S101: a system information, SI, request message is sent, and according to a configuration corresponding to the sent system information, SI, request message, the requested SI is received on the first initial downlink bandwidth part or the second initial downlink bandwidth part corresponding to the configuration.

In some possible implementations, the terminal includes a first type of terminal and a second type of terminal, the first type of terminal may be a Redcap terminal, and the second type of terminal may be an ordinary terminal. The terminal capability of the first type of terminal is different from the terminal capability of the second type of terminal.

The first initial downlink bandwidth part may be used by the first type of terminal and the second type of terminal, and the second initial downlink bandwidth part may only be used by the first type of terminal.

In embodiments of the present disclosure, the configuration corresponding to the SI request message sent by the first type of terminal is different from a configuration corresponding to the SI request message sent by the second type of terminal, so that the network-side device may determine the type of the terminal sending the SI request message according to the configuration corresponding to the received SI request message, and determine the result of whether the requested SI should be sent on the first initial downlink bandwidth part or the requested SI should be sent on the second initial downlink bandwidth part. Therefore, the network-side device may send the requested SI on the corresponding first initial downlink bandwidth part or second initial downlink bandwidth part according to the type of the terminal and the determined result of whether the requested SI should be sent on the first initial downlink bandwidth part or on the second initial downlink bandwidth part.

In an illustrative embodiment, in the case that the network-side device determines that the type of the terminal is the first type of terminal according to the configuration corresponding to the received SI request message sent by the terminal, and determines that the requested SI should be sent on the first initial downlink bandwidth part, the network-side device sends the requested SI to the first type of terminal on the first initial downlink bandwidth part.

In another illustrative embodiment, in the case that the network-side device determines that the type of the terminal is the first type of terminal according to the configuration corresponding to the received SI request message sent by the terminal, and determines that the requested SI should be sent on the second initial downlink bandwidth part, the network-side device sends the requested SI to the first type of terminal on the second initial downlink bandwidth part, so that when it is determined that the requested SI should be sent on the second initial downlink bandwidth part, the network-side device sends the requested SI on the second initial downlink bandwidth part, and the network-side device does not need to transmit the requested SI on the first initial downlink bandwidth part and the second initial downlink bandwidth part separately, so that the transmission efficiency of the network-side device may be improved. Moreover, the first type of terminal may reside in the second initial downlink bandwidth part and receive the requested SI on the second initial downlink bandwidth part, thus avoiding the first type of terminal from switching back and forth between the first initial downlink bandwidth part and the second initial downlink part and reducing the power consumption of the first type of terminal.

In yet another illustrative embodiment, in the case that the network-side device determines that the type of the terminal is the second type of terminal according to the configuration corresponding to the received SI request message sent by the terminal, and determines that the requested SI should be sent on the first initial downlink bandwidth part, the network-side device sends the requested SI to the second type of terminal on the first initial downlink bandwidth part.

By implementing embodiments of the present disclosure, the network-side device sends the requested SI on the first initial downlink bandwidth part or the second initial downlink bandwidth part corresponding to the configuration, according to the configuration corresponding to the received system information SI request message sent by the terminal. Therefore, when the first type of terminal and the second type of terminal reside in the first initial downlink bandwidth part at the same time, and the on-demand SI is transmitted on the first initial downlink bandwidth part, the first type of terminal and the second type of terminal may both monitor the on-demand SI, thus avoiding the transmission on the two initial downlink bandwidth parts separately, and improving the transmission efficiency of the network-side device. Moreover, when the first type of terminal resides in the second initial downlink bandwidth part, the on-demand SI is transmitted on the second initial bandwidth part, which avoids the first type of terminal from switching back and forth between the first initial downlink bandwidth part and the second initial downlink bandwidth part, thus reducing the power consumption of the first type of terminal.

Please refer to FIG. 11, and FIG. 11 is a flow chart of another system information transmission method provided by an embodiment of the present disclosure.

As illustrated in FIG. 11, the method is executed by the first type of terminal, and the method may include but is not limited to the following steps.

At S111: an SI request message is sent based on the first configuration, and the requested SI is received on the first initial downlink bandwidth part or the second initial downlink bandwidth part corresponding to the first configuration.

In embodiments of the present disclosure, after receiving the SI request message sent by the first type of terminal based on the first configuration, the network-side device may determine that its terminal type is the first type of terminal, and determine the result of whether the requested SI should be sent on the first initial downlink bandwidth part or the requested SI should be sent on the second initial downlink bandwidth part.

In some possible implementations, the first configuration includes a first specific physical random access channel (PRACH) resource. That is, S 111 of the above embodiments may be to send the SI request message using the first specific PRACH resource and receive the requested SI on the first initial downlink bandwidth part or the second initial downlink bandwidth part corresponding to the first configuration.

In all embodiments of the present disclosure, the first type of terminal may use the first specific PRACH resource to send the SI request message, and the second type of terminal may use a second specific PRACH resource to send the SI request message. The first specific PRACH resource used by the first type of terminal is different from the second specific PRACH resource used by the second type of terminal. Therefore, the network-side device may determine that the type of the terminal sending the SI request message is the first type of terminal or the second type of terminal according to the received first specific PRACH resource or the second specific PRACH resource.

In some possible implementations, the first initial downlink bandwidth part may be used by the second type of terminal and the first type of terminal, and the second initial downlink bandwidth part may only be used by the first type of terminal. In some possible implementations, the first type of terminal may be a Redcap terminal, the second type of terminal may be an ordinary terminal, and the terminal capability of the first type of terminal is different from the terminal capability of the second type of terminal.

In the above embodiment, the first type of terminal and the second type of terminal use different PRACH resources; After receiving the PRACH resource for sending the SI request message, the network-side device may determine whether the terminal sending the SI request message is the first type of terminal or the second type of terminal according to the PRACH resource corresponding to the SI request message. The corresponding network-side device may determine the result of whether the requested SI should be sent on the first initial downlink bandwidth part or the requested SI should be sent on the second initial downlink bandwidth part according to the type of the terminal and based on the first configuration, and correspondingly send the requested SI on the first initial downlink bandwidth part or the second initial downlink bandwidth part. That is, in response to the received SI request message being sent through the first specific PRACH resource, it may be determined that the terminal sending the SI request message is the first type of terminal; the result of whether the requested SI should be transmitted on the first initial downlink bandwidth part or the requested SI should be transmitted on the second initial downlink bandwidth part is determined based on the first configuration; and the requested SI is sent on the first initial downlink bandwidth part or the second initial downlink bandwidth part correspondingly.

Based on this, in the case that the network-side device determines that the terminal type is the first type of terminal according to the received SI request message including the first specific PRACH resource, and determines that the requested SI should be sent on the first initial downlink bandwidth part based on the first configuration, the network-side device sends the requested SI to the first type of terminal on the first initial downlink bandwidth part. Or, in the case that the network-side device determines that the terminal type is the first type of terminal according to the received SI request message including the first specific PRACH resource, and determines that the requested SI should be transmitted on the second initial downlink bandwidth part based on the first configuration, the network-side device sends the requested SI to the first type of terminal on the second initial downlink bandwidth part. Therefore, the network-side device is prevented from transmitting the requested SI on the first initial downlink bandwidth part and the second initial downlink bandwidth part separately, so that the transmission efficiency of the network-side device may be improved. Moreover, when the first type of terminal resides in the second initial downlink bandwidth part, the requested SI may be received on the second initial downlink bandwidth part, so that the first type of terminal is prevented from switching back and forth between the first initial downlink bandwidth part and the second initial downlink bandwidth part, thus reducing the power consumption of the first type of terminal.

In some embodiments, the first specific PRACH resource includes at least one of the following: a specific preamble; a specific PRACH transmission opportunity; a specific frequency resource; or a specific initial uplink bandwidth part.

In embodiments of the present disclosure, the first specific PRACH resource of the first type of terminal may include a specific preamble and/or a specific PRACH transmission opportunity and/or a specific frequency resource and/or a specific initial uplink bandwidth part.

Please refer to FIG. 12, and FIG. 12 is a flow chart of yet another system information transmission method provided by an embodiment of the present disclosure.

As illustrated in FIG. 12, the method is executed by the first type of terminal, and the method may include but is not limited to the following steps.

At S121: the first configuration information of the network-side device is received, and the configuration information includes a first specific PRACH resource and/or a second specific PRACH resource.

It should be noted that step S121 may be implemented alone or in combination with any of other steps in embodiments of the present disclosure, for example, in combination with step S101 and/or step S111 in embodiments of the present disclosure, which is not limited by embodiments of the present disclosure.

In the above embodiments, the first configuration information includes the first specific PRACH resource, and the network-side device sends the first configuration information including the first specific PRACH resource to the first type of terminal, to inform the first type of terminal of the PRACH resource for sending the SI request message.

In the above embodiments, the first configuration information includes the second specific PRACH resource, and the network-side device sends the first configuration information including the second specific PRACH resource to the second type of terminal, to inform the second type of terminal of the PRACH resource for sending the SI request message.

In the above embodiments, the first configuration information includes the first specific PRACH resource and the second specific PRACH resource, and the network-side device sends the first configuration information including the first specific PRACH resource to the first type of terminal and sends the configuration information including the second specific PRACH resource to the second type of terminal, to separately inform the first type of terminal and the second type of terminal of the PRACH resource for sending the SI request message.

There are many ways for the first type of terminal to determine the first specific PRACH resource. In the above embodiment, the network-side device makes the first type of terminal determine the first specific PRACH resource by sending the first configuration information. However, it may be understood by those skilled in the art that the first type of terminal may also determine the first specific PRACH resource in other ways, such as by communication protocol, or receiving the first configuration information of the first specific PRACH resource from other devices, or pre-storing it in the first type of terminal, which is not limited by embodiments of the present disclosure. Correspondingly, there are many ways for the second type of terminal to determine the second specific PRACH resource, such as the previous examples, which will not be repeated here.

Please refer to FIG. 13, and FIG. 13 is a flow chart of yet another system information transmission method provided by an embodiment of the present disclosure.

As illustrated in FIG. 13, the method is executed by the first type of terminal, and the method may include but is not limited to the following steps.

At S131: an SI request message is sent based on a second configuration, and the requested SI is received on the first initial downlink bandwidth part or the second initial downlink bandwidth part corresponding to the second configuration.

In embodiments of the present disclosure, after receiving the SI request message sent by the first type of terminal based on the second configuration, the network-side device may determine that its terminal type is the first type of terminal, and determine the result of whether the requested SI should be sent on the first initial downlink bandwidth part or the requested SI should be sent on the second initial downlink bandwidth part.

In some possible implementations, the second configuration includes the message 3 (Msg3) including the SI request message sent by the first type of terminal using the second initial uplink bandwidth part, that is, S131 of embodiments may be: sending the message 3 (Msg3) including the SI request message using the second initial uplink bandwidth part, and receiving the requested SI on the first initial downlink bandwidth part or the second initial downlink bandwidth part corresponding to the second configuration.

In embodiments of the present disclosure, the initial uplink bandwidth parts used by the first type of terminal and the second type of terminal to send the message 3 (Msg3) may be different. The first type of terminal may use the first initial uplink bandwidth part or the second initial uplink bandwidth part to send the message 3 (Msg3), and the second type of terminal may only use the first initial uplink bandwidth part to send the message 3 (Msg3). Therefore, according to the received message 3 (Msg3) sent by the first type of terminal using the second initial uplink bandwidth part, the network-side device may determine that the message 3 (Msg3) is sent by the first type of terminal, thereby determining that the type of the first type of terminal is the first type of terminal.

In some possible implementations, the first initial downlink bandwidth part may be used by the second type of terminal and the first type of terminal, and the second initial downlink bandwidth part may only be used by the first type of terminal. In some possible implementations, the first type of terminal may be a Redcap terminal, the second type of terminal may be an ordinary terminal, and the terminal capability of the first type of terminal is different from the terminal capability of the second type of terminal.

In the above embodiment, the network-side device receives the message 3 (Msg3) including the SI request message sent through the second initial uplink bandwidth part used by the first type of terminal, and may determine that its terminal type is the first type of terminal. The corresponding network-side device may determine the result of whether the requested SI should be sent on the first initial downlink bandwidth part or the requested SI should be sent on the second initial downlink bandwidth part according to the type of the terminal and based on the second configuration, and correspondingly send the requested SI on the first initial downlink bandwidth part or the second initial downlink bandwidth part. That is, in response to receiving the message 3 (Msg3) including the SI request message sent through the second initial uplink bandwidth part used by the first type of terminal, it may be determined that its terminal type is the first type of terminal; the result of whether the requested SI should be sent on the first initial downlink bandwidth part or the requested SI should be sent on the second initial downlink bandwidth part is determined based on the second configuration; the requested SI is sent on the first initial downlink bandwidth part or the second initial downlink bandwidth part correspondingly.

Based on this, in the case that the network-side device determines that the terminal type is the first type of terminal according to the received message 3 (Msg3) including the SI request message sent through the second initial uplink bandwidth part used by the first type of terminal, and determines that the requested SI should be sent on the first initial downlink bandwidth part, the network-side device sends the requested SI to the first type of terminal on the first initial downlink bandwidth part. Or, in the case that the network-side device determines that the terminal type is the first type of terminal according to the received SI request message including the first specific PRACH resource, and determines that the requested SI should be sent on the second initial downlink bandwidth part based on the second configuration, the network-side device transmits the requested SI to the first type of terminal on the second initial downlink bandwidth part. Therefore, the network-side device is prevented from transmitting the requested SI on the first initial downlink bandwidth part and the second initial downlink bandwidth part separately, so that the transmission efficiency of the network-side device may be improved. Moreover, when the first type of terminal resides in the second initial downlink bandwidth part, the requested SI may be received on the second initial downlink bandwidth part, so that the first type of terminal is prevented from switching back and forth between the first initial downlink bandwidth part and the second initial downlink bandwidth part, thus reducing the power consumption of the first type of terminal.

In some embodiments, the message 3 (Msg3) includes the information field of the SI request message.

In some embodiments, the message 3 (Msg3) includes the information field of the SI request message.

Please refer to FIG. 14, and FIG. 14 is a flow chart of yet another system information transmission method provided by an embodiment of the present disclosure.

As illustrated in FIG. 14, the method is executed by the first type of terminal, and the method may include but is not limited to the following steps:

At S141: a first message is sent, the first message is a random access request message, and a random access is received on the second initial uplink bandwidth part.

It may be understood that when the first type of terminal randomly accesses the network-side device, it may send a random access request to the network-side device, thereby initiating a random access to the network-side device.

It should be noted that step S141 may be implemented alone or in combination with any of other steps in embodiments of the present disclosure, for example, in combination with step S101 and/or step S111 and/or step S121 and/or step S131 in embodiments of the present disclosure, which is not limited by embodiments of the present disclosure.

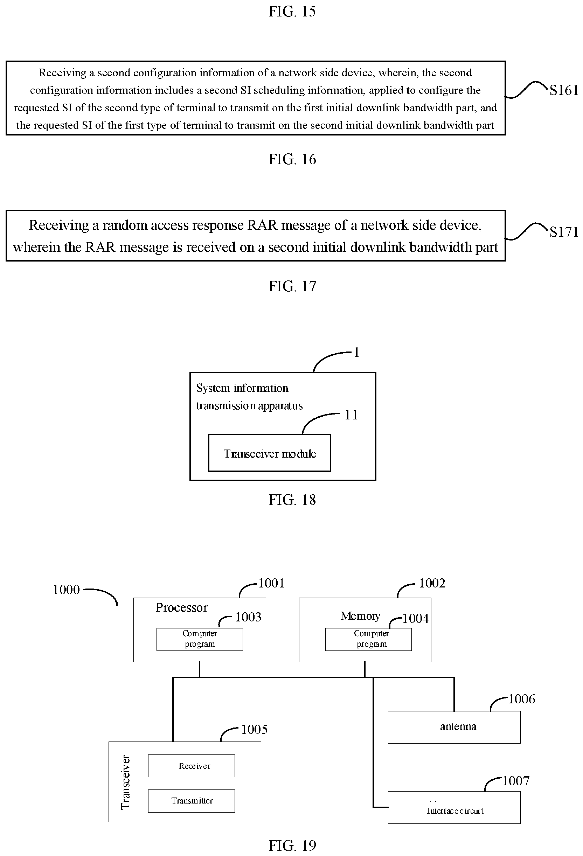

Please refer to FIG. 15, and FIG. 15 is a flow chart of yet another system information transmission method provided by an embodiment of the present disclosure.

As illustrated in FIG. 15, the method is executed by the first type of terminal, and the method may include but is not limited to the following steps.

At S151: the second configuration information of the network-side device is received, the second configuration information includes first SI scheduling information, and the first SI scheduling information is applied to configure the transmission of the requested SI only on the first initial downlink bandwidth part.

In embodiments of the present disclosure, the network-side device sends a second configuration information including the first SI scheduling information to the terminal, and the first SI scheduling information indicates that the terminal may receive the requested SI only on the first initial downlink bandwidth. In response to the SI request message sent by the terminal, the network-side device sends the requested SI to the terminal on the first initial downlink bandwidth, and the terminal includes the first type of terminal and the second type of terminal.

In some possible implementations, the terminal includes a first type of terminal and a second type of terminal, the first type of terminal may be a Redcap terminal, and the second type of terminal may be an ordinary terminal. The terminal capability of the first type of terminal is different from the terminal capability of the second type of terminal.

In embodiments of the present disclosure, the first SI scheduling information is applied to configure the transmission of the requested SI only on the first initial downlink bandwidth part. It may be understood that in this case, the requested SI may only be received on the first initial downlink bandwidth part regardless of whether the type of the terminal is the first type of terminal or the second type of terminal.

In embodiments of the present disclosure, the first configuration information may be a SIB1 message and a system information block (SIB).

In the above embodiments, the second configuration information includes the first SI scheduling information, and the network-side device sends the second configuration information including the first SI scheduling information to the terminal, to inform the first type of terminal to receive the requested SI on the first initial downlink bandwidth part.

There are many ways for the first type of terminal to determine the first SI scheduling information. In the above embodiment, the network-side device makes the first type of terminal determine the first SI scheduling information by sending the second configuration information. However, it may be understood by those skilled in the art that the first type of terminal may also determine the first SI scheduling information in other ways, such as by communication protocol, or receiving the configuration information of the first SI scheduling information from other devices, or pre-storing it in the first type of terminal, which is not limited by embodiments of the present disclosure. It should be noted that S 151 may be implemented alone or in combination with any of other steps in embodiments of the present disclosure, for example, in combination with S101 and/or S 111 and/or S121 and/or S131 and/or S 141 in embodiments of the present disclosure, which is not limited by embodiments of the present disclosure.

Please refer to FIG. 16, and FIG. 16 is a flow chart of yet another system information transmission method provided by an embodiment of the present disclosure.

As illustrated in FIG. 16, the method is executed by the first type of terminal, and the method may include but is not limited to the following steps.

At S161: the second configuration information of the network-side device is received, the second configuration information includes second SI scheduling information, and the second SI scheduling information is applied to configure the requested SI of the second type of terminal to transmit on the first initial downlink bandwidth part, and the requested SI of the first type of terminal to transmit on the second initial downlink bandwidth part.

In some possible implementations, the terminal includes a first type of terminal and a second type of terminal, the first type of terminal may be a Redcap terminal, and the second type of terminal may be an ordinary terminal. The terminal capability of the first type of terminal is different from the terminal capability of the second type of terminal.

In embodiments of the present disclosure, the network-side device sends the second configuration information including the second SI scheduling information to the terminal, and the second SI scheduling information indicates that the requested SI of the second type of terminal is transmitted on the first initial downlink bandwidth part and the requested SI of the first type of terminal is transmitted on the second initial downlink bandwidth part. In response to the SI request message sent by the first type of terminal, the network-side device sends the requested SI on the second initial downlink bandwidth, and in response to the SI request message sent by the second type of terminal, the network-side device sends the requested SI on the first initial downlink bandwidth.

In embodiments of the present disclosure, the second configuration information is sent to the first type of terminal, to inform the first type of terminal to receive the requested SI on the second initial bandwidth part; and the second configuration information is sent to the second type of terminal, to inform the second type of terminal to receive the requested SI on the first initial bandwidth part.

There are many ways for the first type of terminal and the second type of terminal to determine the second SI scheduling information. In the above embodiments, the network-side device makes the first type of terminal and the second type of terminal determine the second SI scheduling information by sending the second configuration information. However, it may be understood by those skilled in the art that the first type of terminal and the second type of terminal may also determine the second SI scheduling information in other ways, such as by communication protocol, or receiving the configuration information of the second SI scheduling information from other devices, or pre-storing it in the first type of terminal and the second type of terminal, which is not limited by embodiments of the present disclosure.

In embodiments of the present disclosure, after the network-side device receives the SI request information sent by the terminal and determines that the terminal type is the first type of terminal, the requested SI is sent to the first type of terminal on the second initial downlink bandwidth part. Therefore, the network-side device may only transmit the requested SI on the second initial downlink bandwidth part, which avoids the need for the network-side device to transmit the requested SI on the first initial downlink bandwidth part and the second initial downlink bandwidth part separately, and may improve the transmission efficiency of the network-side device. Moreover, the first type of terminal resides in the second initial downlink bandwidth part and may receive the requested SI on the second initial downlink bandwidth part, which avoids the first type of terminal from switching back and forth between the first initial downlink bandwidth part and the second initial downlink bandwidth part, thus reducing the power consumption of the first type of terminal.

It should be noted that S161 may be implemented alone or in combination with any of other steps in embodiments of the present disclosure, for example, in combination with S101 and/or S111 and/or S121 and/or S131 and/or S141 and/or S151 in embodiments of the present disclosure, which is not limited by embodiments of the present disclosure.

Please refer to FIG. 17, and FIG. 17 is a flow chart of yet another system information transmission method provided by an embodiment of the present disclosure.

As illustrated in FIG. 17, the method is executed by the first type of terminal, and the method may include but is not limited to the following steps.

At S171: a random access response (RAR) message of the network-side device is received, and the RAR message is received on the second initial downlink bandwidth part.

It should be noted that step S171 may be implemented alone or in combination with any of other steps in embodiments of the present disclosure, for example, in combination with step S101 and/or step S111 and/or step S121 and/or step S131 and/or S141 and/or S151 and/or S161 in embodiments of the present disclosure, which is not limited by embodiments of the present disclosure.

In embodiments of the present disclosure, the network-side device receives the SI request message sent by the first type of terminal on the first specific PRACH resource, or, after receiving the random access sent by the first type of terminal on the second initial uplink bandwidth part, sends a RAR message to the first type of terminal, to inform that the first type of terminal may access the network-side device.

In the above-mentioned embodiments provided by the present disclosure, the methods provided by embodiments of the present disclosure are introduced from the perspectives of the network-side device and the first type of terminal separately. In order to realize the functions in the method provided by embodiments of the present disclosure, the network-side device and the first type of terminal may include hardware structures and software modules, and realize the above functions in the form of hardware structures, software modules, or hardware structures plus software modules. One of the above functions may be implemented in a hardware structure, a software module, or a hardware structure plus a software module.

Please refer to FIG. 18, and FIG. 18 is a schematic structural diagram of a system information transmission apparatus 1 provided by an embodiment of the present disclosure. The system information transmission apparatus 1 illustrated in FIG. 18 may include a transceiver module 11. The transceiver module 11 may include a sending module and/or a receiving module. The sending module is configured to realize the sending function, the receiving module is configured to realize the receiving function, and the transceiver module 11 may realize the sending function and/or the receiving function.

The system information transmission apparatus 1 may be a terminal (such as the first type of terminal in the aforementioned method embodiment), an apparatus in the terminal, or an apparatus that may be matched with the terminal for use. Alternatively, the system information transmission apparatus 1 may be a network-side device, an apparatus in the network-side device, or an apparatus that may be matched with the network-side device for use.

The system information transmission apparatus 1 is network-side device.

The apparatus includes a transceiver module 11, configured to, according to a configuration corresponding to a received system information (SI) request message sent by a terminal, send requested SI on a first initial downlink bandwidth part or a second initial downlink bandwidth part corresponding to the configuration.

The system information transmission apparatus 1 is a terminal (such as the first type of terminal in the aforementioned method embodiment).

The apparatus includes a transceiver module 11, configured to send a system information (SI) request message, and according to a configuration corresponding to the SI request message, receive requested SI on a first initial downlink bandwidth part or a second initial downlink bandwidth part corresponding to the configuration.

With regard to the system information transmission apparatus 1 in the above embodiments, the specific way in which each module performs the operation has been described in detail in embodiments of the method, and will not be described in detail here. The system information transmission apparatus 1 provided in the above embodiments of the present disclosure has the same or similar beneficial effects as the system information transmission methods provided in some of the above embodiments, which will not be repeated here.

Please refer to FIG. 19, and FIG. 19 is a schematic structural diagram of a communication apparatus 1000 provided by an embodiment of the present disclosure. The communication apparatus 1000 may be a network-side device; a terminal (such as the first type of terminal in the aforementioned method embodiment); a chip, a chip system, or a processor that supports the network-side device to realize the above methods; or a chip, a chip system, or a processor that supports the terminal to realize the above methods. The communication apparatus 1000 may be used to implement the methods described in the above method embodiments, and reference may be made to the description in the above method embodiments for details.

The communication apparatus 1000 may be a network-side device; a terminal; a chip, a chip system, or a processor that supports the network-side device to realize the above methods; or a chip, a chip system, or a processor that supports the terminal to realize the above methods. The apparatus may be used to realize the methods described in the above method embodiments, and reference may be made to the description in the above method embodiments for details.

The communication apparatus 1000 may include one or more processors 1001. The processor 1001 may be a general-purpose processor or a special-purpose processor or the like, such as a baseband processor or a central processor. The baseband processor may be used to process communication protocols and communication data, and the central processor may be used to control communication apparatus (such as base station, baseband chip, terminal device, terminal device chip, DU or CU, etc.), execute computer programs, and process data of computer programs.

Optionally, the communication apparatus 1000 may further include one or more memories 1002, on which a computer program 1004 may be stored. The memory 1002 executes the computer program 1004, so that the communication apparatus 1000 performs the methods described in the above method embodiments. Optionally, data may also be stored in the memory 1002. The communication apparatus 1000 and the memory 1002 may be set separately or integrated together.

Optionally, the communication apparatus 1000 may further include a transceiver 1005 and an antenna 1006. The transceiver 1005 may be called a transceiver unit, a transceiver, a transceiver circuit, etc., and is used to realize the transceiving function. The transceiver 1005 may include a receiver and a transmitter. The receiver may be called a receiving machine or a receiving circuit, etc., and is used to realize the receiving function. The transmitter may be called a transmitting machine or a transmitting circuit, etc., and is used to realize the transmitting function.

Optionally, the communication apparatus 1000 may further include one or more interface circuits 1007. The interface circuit 1007 is used to receive code instructions and transmit them to the processor 1001. The processor 1001 executes the code instructions to cause the communication apparatus 1000 to perform the methods described in the above method embodiments.

The communication apparatus 1000 is a network-side device: the transceiver 1005 is used to execute S21 in FIG. 2, S31 in FIG. 3, S41 in FIG. 4, S51 in FIG. 5, S61 in FIG. 6, S71 in FIG. 7, S81 in FIG. 8 and S91 in FIG. 9.

The communication apparatus 1000 is a terminal (such as the first type of terminal in the aforementioned method embodiments): the transceiver 1005 is used to execute S101 in FIG. 10, S111 in FIG. 11, S121 in FIG. 12, S131 in FIG. 13, S141 in FIG. 14, S151 in FIG. 15, S161 in FIG. 16 and S171 in FIG. 17.

In one implementation, the processor 1001 may include a transceiver configured to realize receiving and transmitting functions. For example, the transceiver may be a transceiver circuit, or an interface, or an interface circuit. The transceiver circuit, the interface or the interface circuit configured to realize the receiving and transmitting functions may be separated or integrated. The transceiver circuit, interface or interface circuit may be used for reading and writing codes/data, or the transceiver circuit, interface or interface circuit may be used for signal transmission or transfer.

In one implementation, the processor 1001 may store a computer program 1003, and the computer program 1003 runs on the processor 1001, to cause the communication apparatus 1000 to perform the methods described in the above method embodiments. The computer program 1003 may be solidified in the processor 1001, in which case the processor 1001 may be implemented by hardware.

In one implementation, the communication apparatus 1000 may include a circuit, and the circuit may realize the functions of sending or receiving or communication in the aforementioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and transceiver may also be manufactured by various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a terminal device (such as the terminal device in the aforementioned method embodiments), but the scope of the communication apparatus described in the present disclosure is not limited to this, and the structure of the communication apparatus may not be limited by FIG. 19. The communication apparatus may be an independent device or may be part of a larger device. For example, the communication apparatus may be:
(1) an independent integrated circuit (IC), or a chip, or a chip system or subsystem;
(2) a set with one or more ICs, optionally, the IC set may also include storage components for storing data and computer programs;
(3) ASIC, such as Modem;
(4) modules that may be embedded in other devices;
(5) receiver, terminal device, intelligent terminal device, cellular phone, wireless device, handset, mobile unit, vehicle-mounted device, network device, cloud device, artificial intelligence device, etc.;
(6) others and so on.

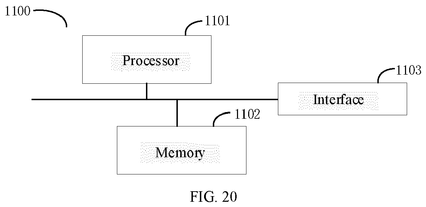

For the case that the communication apparatus may be a chip or a chip system, please refer to FIG. 20, which is a structural diagram of a chip provided in an embodiment of the present disclosure.

A chip 1100 includes a processor 1101 and an interface 1103. The number of processors 1101 may be one or more, and the number of interfaces 1103 may be multiple.

For the case where the chip is used to realize the function of the terminal device in embodiments of the present disclosure.

The interface 1103 is configured to receive code instructions and transmit them to the processor.

The processor 1101 is configured to execute code instructions to perform the system information transmission method as described in some embodiments above.

For the case that the chip is used to realize the function of the network-side device in embodiments of the present disclosure.

The interface 1103 is configured to receive code instructions and transmit them to the processor.

The processor 1101 is configured to execute code instructions to perform the system information transmission method as described in some embodiments above.

Optionally, the chip 1100 further includes a memory 1102, and the memory 1102 is configured to store necessary computer programs and data.

Those skilled in the art may also understand that various illustrative logical block and step listed in embodiments of the present disclosure may be implemented by electronic hardware, computer software, or a combination of both. Whether this function is realized by hardware or software depends on the specific application and the design requirements of the whole system. Those skilled in the art may use various methods to realize the described functions for each specific application, but this realization should not be understood as beyond the scope of protection of embodiments of the present disclosure.

Embodiments of the present disclosure also provide a system for system information transmission, the system includes a system information transmission apparatus as a terminal (such as the first type of terminal in the aforementioned method embodiments) and a system information transmission apparatus as a network-side device in the aforementioned embodiments of FIG. 18, or the system includes a communication apparatus as a terminal (such as the first type of terminal in the aforementioned method embodiments) and a communication apparatus as a network-side device in the aforementioned embodiments of FIG. 19.

The present disclosure also provides a readable storage medium on which instructions are stored, and when the instructions are executed by a computer, the functions of any of the above method embodiments are realized.

The present disclosure also provides a computer program product, and when the computer grogram product is executed by a computer, the functions of any of the above method embodiments are realized.

In the above embodiments, it may be realized in whole or in part by software, hardware, firmware or any combination thereof. When implemented in software, it may be fully or partially implemented in the form of a computer program product. The computer program product includes one or more computer programs. When the computer program is loaded and executed on a computer, the flow or function according to embodiments of the present disclosure is generated in whole or in part. The computer may be a general-purpose computer, a special-purpose computer, a computer network, or other programmable apparatus. The computer program may be stored in a computer-readable storage medium or transmitted from one computer-readable storage medium to another. For example, the computer program may be transmitted from a website, computer, server or data center to another website, computer or data center by wired (such as coaxial cable, optical fiber, digital subscriber line (DSL)) or wireless (such as infrared, wireless, microwave, etc.) means. The computer-readable storage medium may be any available medium that a computer may access or a data storage device of a server, data center or the like that contains one or more available media integration. The available medium may be a magnetic medium (e.g., floppy disk, hard disk, magnetic tape), an optical medium (e.g., high-density digital video disc (DVD)), or a semiconductor medium (e.g., solid state disk (SSD)) and the like.

It may be understood by those skilled in the art that the first, second and other numerical orders involved in the present disclosure are only for the convenience of description, and are not used to limit the scope of embodiments of the present disclosure, but also indicate the order.

"At least one" in the present disclosure may also be described as one or a plurality, and the plurality may be two, three, four or more, which are not limited by the present disclosure. In embodiments of the present disclosure, for a technical feature, the technical features are distinguished by "first", "second", "third", "A", "B", "C" and "D", and the technical features described by "first", "second", "third", "A", "B", "C" and "D" are in no order or size.

The correspondence illustrated in each table in the present disclosure may be configured or predefined. The values of the information in each table are only examples, and may be configured as other values, which are not limited by the present disclosure. When configuring the correspondence between information and parameters, it is not necessary to configure all the correspondence indicated in each table. For example, in the table in the present disclosure, the corresponding relationship illustrated by some rows may not be configured. For another example, appropriate deformation adjustments may be made based on the above table, such as splitting, merging and so on. The names of the parameters indicated by the headings in the above tables may also be other names that may be understood by communication apparatus, and the values or representations of the parameters may also be other values or representations that may be understood by communication apparatus. Other data structures may also be used when the above tables are implemented, such as arrays, queues, containers, stacks, linear tables, pointers, linked lists, trees, graphs, structures, classes, heaps, hash tables, etc.

Pre-definition in the present disclosure may be understood as definition, pre-definition, storage, pre-storage, pre-negotiation, pre-configuration, curing, or pre-firing.

One of ordinary skill in the art may realize that the units and algorithm steps of various examples described in connection with embodiments disclosed herein may be implemented in electronic hardware, or a combination of computer software and electronic hardware. Whether these functions are implemented in hardware or software depends on the specific application and design constraints of the technical solution. Skilled people may use different methods to implement the described functions for each specific application, but such implementation should not be considered beyond the scope of the present disclosure.

It may be clearly understood by those skilled in the art that for the convenience and conciseness of description, the specific working processes of the system, apparatus and unit described above may refer to the corresponding processes in the aforementioned method embodiments, and are not repeated here.

The above is only the specific embodiments of the present disclosure, but the protection scope of the present disclosure is not limited to this. Any person familiar with this technical field may easily think of changes or substitutions within the technical scope disclosed in the present disclosure, which should be included in the protection scope of the present disclosure. Therefore, the scope of protection of the present disclosure should be based on the scope of protection of the claims.

## Claims

1. A system information transmission method, executed by a network-side device, and comprising:
according to a configuration corresponding to a received system information, SI, request message sent by a terminal, sending requested SI on a first initial downlink bandwidth part or a second initial downlink bandwidth part corresponding to the configuration.

2. The method according to claim 1, wherein the configuration comprises a first configuration, and the method further comprises:
in response to receiving the SI request message sent by a first type of terminal based on the first configuration, sending the requested SI on the first initial downlink bandwidth part or the second initial downlink bandwidth part corresponding to the first configuration.

3. The method according to claim 2, wherein the first configuration comprises a first specific physical random access channel, PRACH, resource and/or a second specific PRACH resource; wherein the first specific PRACH resource used by the first type of terminal is different from the second specific PRACH resource used by a second type of terminal; a terminal capability of the first type of terminal is different from a terminal capability of the second type of terminal; and in response to receiving the SI request message sent by the first type of terminal based on the first configuration comprises:
in response to receiving the SI request message sent by the first type of terminal using the first specific PRACH resource.

4. The method according to claim 3, wherein the first specific PRACH resource comprises at least one of:
a specific preamble;
a specific PRACH transmission opportunity;
a specific frequency resource; or
a specific initial uplink bandwidth part.

5. The method according to claim 3 or 4, further comprising:
sending first configuration information, wherein the first configuration information comprises the first specific PRACH resource and/or the second specific PRACH resource.

6. The method according to claim 1, wherein the configuration comprises a second configuration, and the method further comprises:
in response to receiving the SI request message sent by a first type of terminal based on the second configuration, sending the requested SI on the first initial downlink bandwidth part or the second initial downlink bandwidth part corresponding to the second configuration.

7. The method according to claim 6, wherein in response to receiving the SI request message sent by the first type of terminal based on the second configuration comprises:
in response to receiving a message 3 comprising the SI request message sent by the first type of terminal using a second initial uplink bandwidth part.

8. The method according to claim 7, wherein the message 3 comprises an information field of the SI request message.

9. The method according to claim 7 or 8, further comprising:
receiving a first message of the first type of terminal, wherein the first message is a random access request message, and the random access is received in the second initial uplink bandwidth part.

10. The method according to any one of claims 1 to 9, further comprising:
sending a second configuration information, wherein the second configuration information comprises first SI scheduling information, and the first SI scheduling information is applied to configure transmission of the requested SI on a first initial bandwidth part.

11. The method according to any one of claims 1 to 9, further comprising:
sending a second configuration information, wherein the second configuration information comprises a second SI scheduling information, and the second SI scheduling information is applied to configure the requested SI of a second type of terminal to transmit on the first initial downlink bandwidth part, and the requested SI of a first type of terminal to transmit on the second initial downlink bandwidth part.

12. The method according to claim 10 or 11, further comprising:
sending a random access response, RAR, message to a first type of terminal, wherein the RAR message is sent on the second initial downlink bandwidth part.

13. A system information transmission method, executed by a first type of terminal, and comprising:
sending a system information, SI, request message, and according to a configuration corresponding to the SI request message, receiving requested SI on a first initial downlink bandwidth part or a second initial downlink bandwidth part corresponding to the configuration.

14. The method according to claim 13, wherein the configuration comprises a first configuration, and the method further comprises:
sending the system information, SI, request message based on the first configuration, and sending the requested SI on the first initial downlink bandwidth part or the second initial downlink bandwidth part corresponding to the first configuration.

15. The method according to claim 14, wherein the first configuration comprises a first specific physical random access channel, PRACH, resource and/or a second specific PRACH resource, wherein the first specific PRACH resource used by the first type of terminal is different from the second specific PRACH resource used by a second type of terminal, a terminal capability of the first type of terminal is different from a terminal capacity of the second type of terminal; and in response to the received SI request message sent by the first type of terminal based on the first configuration comprises:
sending the SI request message using the first specific PRACH resource.

16. The method according to claim 15, wherein the first specific PRACH resource comprises at least one of:
a specific preamble;
a specific PRACH transmission opportunity;
a specific frequency resource; or
a specific initial uplink bandwidth part.

17. The method according to claim 15 or 16, further comprising:
receiving first configuration information of a network-side device, wherein the first configuration information comprises the first specific PRACH resource and/or the second specific PRACH resource.

18. The method of claim 13, wherein the configuration comprises a second configuration, and the method further comprises:
sending the SI request message based on the second configuration, and sending the requested SI on the first initial downlink bandwidth part or the second initial downlink bandwidth part corresponding to the second configuration.

19. The method according to claim 18, wherein sending the SI request message based on the second configuration comprises:
sending a message 3 comprising the SI request message using a second initial uplink bandwidth part.

20. The method according to claim 19, wherein the message 3 comprises an information field of the SI request message.

21. The method according to claim 19 or 20, further comprising:
sending a first message, wherein the first message is a random access request message, and the random access is sent on the second initial uplink bandwidth part.

22. The method according to any one of claims 13 to 21, further comprising:
receiving second configuration information of a network-side device, wherein the second configuration information comprises first SI scheduling information, and the first SI scheduling information is applied to configure transmission of the requested SI on a first initial bandwidth part.

23. The method according to any one of claims 13 to 21, further comprising:
receiving second configuration information of a network-side device, wherein the second configuration information comprises second SI scheduling information, and the second SI scheduling information is applied to configure the requested SI of a second type of terminal to transmit on the first initial downlink bandwidth part, and the requested SI of the first type of terminal to transmit on the second initial downlink bandwidth part.

24. The method according to claim 22 or 23, further comprising:
receiving a random access response, RAR, message of the network-side device, wherein the RAR message is received on the second initial downlink bandwidth part.

25. A system information transmission apparatus, comprising:
a transceiver module configured to, in respond to a system information, SI, request message sent by a first type of terminal, send requested SI on a first initial downlink bandwidth part or a second initial downlink bandwidth part.

26. A system information transmission apparatus, comprising:
a transceiver module configured to send a system information, SI, request message to a network-side device, and receive requested SI on a first initial downlink bandwidth part or a second initial downlink bandwidth part.

27. A communication apparatus, comprising a processor and a memory, wherein a computer program is stored in the memory, and the processor executes the computer program stored in the memory, so that the apparatus performs a method according to any one of claims 1 to 12.

28. A communication apparatus, comprising a processor and a memory, wherein a computer program is stored in the memory, and the processor executes the computer program stored in the memory, so that the apparatus performs a method according to any one of claims 13 to 24.

29. A communication apparatus, comprising: a processor and an interface circuit;
the interface circuit is configured to receive code instructions and transmit the code instructions to the processor;
the processor is configured to execute the code instructions to perform a method according to any one of claims 1 to 12.

30. A communication apparatus, comprising: a processor and an interface circuit;
the interface circuit is configured to receive code instructions and transmit the code instructions to the processor;
the processor is configured to executing the code instructions to perform a method according to any one of claims 13 to 24.

31. A computer-readable storage medium, configured for storing instructions thereon, wherein when executed, the instructions realize a method according to any one of claims 1 to 12.

32. A computer-readable storage medium, configured for storing instructions thereon, wherein when executed, the instructions realize a method according to any one of claims 13 to 24.
